(19) Europäisches Patentamt / European Patent Office / Office européen des brevets

(11) **EP 1 838 064 B1**

(12) **EUROPEAN PATENT SPECIFICATION**

(45) Date of publication and mention
of the grant of the patent:
**21.06.2017 Bulletin 2017/25**

(51) Int Cl.:
*H04L 27/36* (2006.01)  *G02F 1/01* (2006.01)
*G02F 1/225* (2006.01)  *H04B 10/556* (2013.01)

(21) Application number: **07004237.9**

(22) Date of filing: **01.03.2007**

(54) **Apparatus and method for I-Q quadrature modulation transmitter and its I-Q phase bias monitoring**

Vorrichtung und Verfahren für einen I-Q-Quadraturmodulationssender und I-Q-Phasenabweichungsüberwachung davon

Appareil et procédé pour transmetteur de modulation en quadrature I-Q et son contrôle de polarisation de phase I-Q

(84) Designated Contracting States:
**DE FR GB**

(30) Priority: **22.03.2006 CN 200610065454**

(43) Date of publication of application:
**26.09.2007 Bulletin 2007/39**

(73) Proprietor: **FUJITSU LIMITED
Kawasaki-shi,
Kanagawa 211-8588 (JP)**

(72) Inventors:
• **Tao, Zhenning
Chaoyang District
Beijing 100016 (CN)**

• **Rasmussen, Jens C.
Kawasaki-shi
Kanagawa 211-8588 (JP)**

(74) Representative: **Hoffmann Eitle
Patent- und Rechtsanwälte PartmbB
Arabellastraße 30
81925 München (DE)**

(56) References cited:
**EP-A2- 1 589 713    WO-A1-98/24209
US-A- 5 012 208    US-A1- 2003 231 075**

EP 1 838 064 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Apparatus and method for I-Q quadrature modulation transmitter and its I-Q phase bias monitoring.

**Technical Field**

This invention involves apparatus and method for I-Q quadrature modulation transmitter and its I-Q phase bias monitoring. The method is suitable for all communication systems constituted by in-phase branch and quadrature-phase branch, such as Differential Quadrature Phase-Shift Key (DQPSK), Quadrature Phase-Shift Key (QPSK), Multi Phase-Shift Key (M-PSK), Differential Multi Phase-Shift Key (DM-PSK). Quadrature Amplitude Modulation (QAM), optical communication system and other communication systems.

**Background Technologies**

Capacity of optical communication system increased dramatically in the past several years, but traditional binary amplitude shift keying (also known as on-off key, OOK) of NRZ or RZ still dominates as practical modulation technology. Recently, many new modulation and demodulation technologies, such as duobinary, Carrier Suppressed Return-to-Zero (CSRZ) and differential phase-shift keying (DPSK), have been introduced into optical communication. In DPSK modulation, information is represented by phase change of two neighboring symbols. In binary DPSK, phase change is 0 or $\pi$. If phase changes are 0, $\pi/2$, $\pi$ or $3\pi/2$, the modulation technology is called Differential Quadrature Phase-Shift Keying (DQPSK). Compared with traditional OOK technology, phase-shift keying has advantages in terms of optical signal-to-noise ratio (OSNR) gain of 3dB and strong anti-non-linearity capability. Using quaternary symbols, optical DQPSK doubles utilization of frequency spectrum, while requirements for electric device speed, optical dispersion management and polarization mode dispersion are lowered. Hopefully, optical DQPSK will play an important role in the next generation of optical communication system.

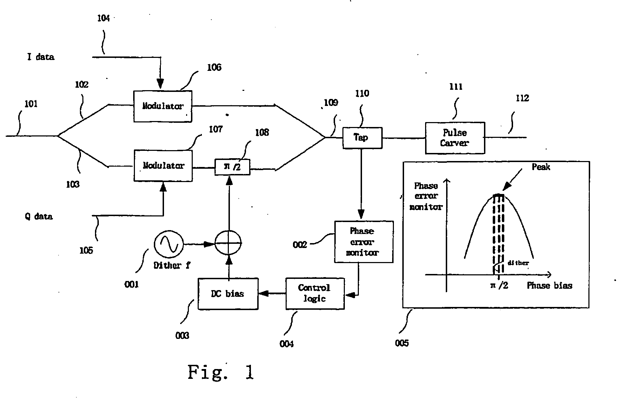

According to *Optical Differential Quadrature Phase-Shift Key (oDQPSK) for High Capacity Optical Transmission* (R.A.Griffin et al, OFC 2002), a typical optical DQPSK transmitter consists of: splitter to divide input optical signal into I and Q branch; I-branch modulator (1 or -1) and Q-branch modulator (1 or -1), with phase bias on Q-branch; combiner to combine I-branch and Q-branch signals into a modulated signal. In order to ensure quadrature of I-branch and Q-branch, value of said phase bias shall be $\pi/2$, otherwise it will cause additional optical signal to noise ratio (OSNR) penalty. Feedback control is usually adopted, in which monitoring device monitors phase error of phase bias and generates phase error signal to adjust phase bias, so as to lock the phase to $\pi/2$ position. An often used feedback control technology today is dither-peak detection. A typical configuration of this scheme is displayed in Figure 1. Phase bias 108 dithers at a fixed frequency f, while a monitoring device 002 outputs corresponding phase error monitoring signal. When phase is at the target value of $\pi/2$, (shown as 005), error signal reaches maximum or minimum value. Control logic 004 adjusts DC bias 003 according to the judgment whether monitoring signal has reached peak value, so that phase bias 108 is set to optimal point. This design has some intrinsic defects:

1. Phase dithering will lead to additional optical signal to noise ratio penalty.
2. Peak detection technology can only determine whether phase is at target value. It can't tell whether the current phase is greater or smaller than target value.
3. Signal obtained via peak detection is in square relation to phase error, therefore peak detection signal becomes far less sensitive when approaching zero error point, which leads to low phase control precision.
4. Speed of phase control is constrained by dithering frequency.

Therefore, a new phase control technology is urgently needed to overcome above mentioned defects.

Document US 5 012 208, 30 April 1991, relates to a quadrature modulator comprising a circuit for the compensation of a local oscillator leak signal in an output signal of the modulator.

Document US 2003/231075 A1, 18 December 2003, relates to compensation of quadrature modulator amplitude imbalance.

**Invention Items**

In view of defects of current technology, this invention provides a dithering-free phase monitoring apparatus and method, which provides both amplitude and direction of phase error. Such apparatus and method are provided by the independent claims. Advantageous embodiments are defined in the dependent claims.

First, this invention provides an I-Q phase bias monitoring apparatus for adjusting phase bias between I-Q branches for an I-Q quadrature modulation transmitter, said I-Q quadrature modulation transmitter comprising an I branch, a Q branch having a phase bias device, and a feedback device, said feedback devise being configured to feedback modulated signals from the I branch and the Q branch, said apparatus being mounted between said feedback device and said phase bias device; said phase bias device being configured to providing a phase bias of $\pi/2$ between the I branch and the Q branch, the apparatus comprising: a module squaring device for receiving a signal from said feedback device and outputting the square of the module of said signal; characterized by: a multiplier for multiplying the data of said I branch by the data of said Q branch by the output of said module squaring device; and an averager for averaging the output of said multiplier, wherein the output of the averager, being proportional to a phase error, is used for adjusting the phase of said phase bias device, so as to lock the phase bias to $\pi/2$.

Second, this invention provides an I-Q phase bias monitoring method for adjusting phase bias between I-Q branches for an I-Q quadrature modulation transmitter, said I-Q quadrature modulation transmitter comprising an I branch, a Q branch having a phase bias device, and a feedback device, said phase bias device being configured to providing a phase bias of $\pi/2$ between the I branch and the Q branch, said feedback devise being configured to feedback modulated signals from the I branch and the Q branch; the method comprising: a module square calculating step for receiving a signal from said feedback device and calculating the square of the module of said signal received; characterized by: a multiplying step for multiplying the data of said I branch by the data of said Q branch by the output of said module square calculating step; and an averaging step for averaging the output of said multiplying step, wherein the output of the averaging step, being proportional to a phase error, is used for adjusting the phase of said phase bias device, so as to lock the phase bias to $\pi/2$.

Third, this invention provides an I-Q quadrature modulation transmitter, comprising an I branch, a Q branch having a phase bias device, a feedback device, and an apparatus for adjusting phase bias between I-Q branches mounted between said feedback device and said phase bias device, said phase bias device being configured to providing a phase bias of $\pi/2$ between the I branch and the Q branch, said feedback devise being configured to feedback modulated signals from the I branch and the Q branch; said apparatus for observing phase bias between I-Q branches comprising: a module squaring device for receiving a signal from said feedback device and outputting the square of the module of said signal; characterized by: a multiplier for multiplying the data of said I branch by the data of said Q branch by the output of said module squaring device; and an averager for averaging the output of said multiplier, wherein the output of the averager, being proportional to a phase error, is used for adjusting the phase of said phase bias device, so as to lock the phase bias to $\pi/2$.

Furthermore, this invention also includes device and procedure to control the phase bias according to monitoring result.

This invention is characterized by the following advantages:

1) It can avoid using phase dithering and thus the consequential does not cause additional OSNR penalty;
2) It not only provides the amplitude of phase error, but also direction of phase error;
3) It can significantly improve error control precision. Phase error signal output by phase monitor is proportion to the phase error (i.e. derivative of error signal to phase error is fixed.) This feature guarantees that the sensitiveness of phase error signal remains fixed when phase error approaches zero; and
4) Speed of phase control is no longer restricted by dithering speed, thus quick phase locking can be realized.

It must be noted here that though this invention has a number of advantages, a specific implementation mode does not necessarily enjoy all advantages mentioned above. Some implementation modes may even fail to provide any of the advantages above, while featuring other advantages or merits.

**Notes to Attached Drawings**

Features and advantages of this invention can be easily seen from the attached drawings and notes to optimal implementation modes:

Figure 1 shows structure of DQPSK transmitter and that of traditional "dither-peak detection" scheme;
Figure 2 shows detailed structure of I-Q phase bias monitoring apparatus of this invention and structure of corresponding DQPSK transmitter;
Figure 3 to Figure 16 show 14 different types of multiplier structure. The multiplier is a part of I-Q phase bias monitoring apparatus of this invention;
Figure 17 to Figure 19 show phase control method of this invention; and
Figure 20 shows process of I-Q phase bias monitoring method of this invention.

**Details for Implementation Mode**

Detailed explanation of implementation mode of this invention is given below with reference to attached drawings.

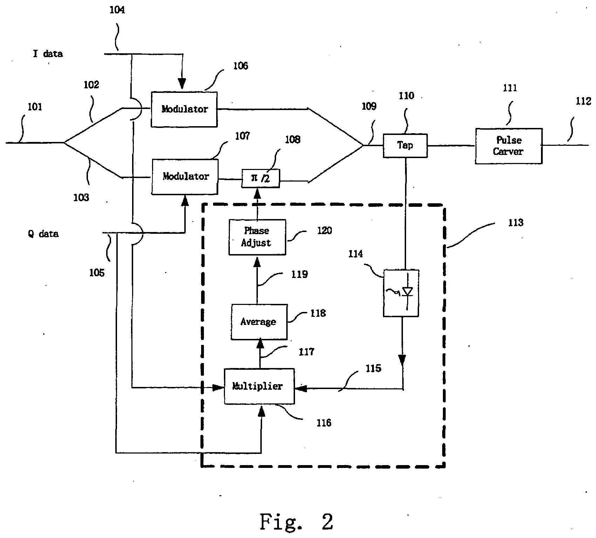

Figure 2 shows detailed structure of DQPSK transmitter of I-Q phase bias monitoring of this invention. In Figure 2, unmodulated input signal 101 is divided into I-branch 102 and Q-branch 103, and both branches are equipped with modulator, namely 106/107. The modulator conducts 0 or $\pi$ phase modulation on input signal according to I/Q branch data 104/105. There is a phase bias 108 on Q-branch. The phase of 108 must be $\pi/2$, otherwise additional optical signal to noise ratio (OSNR) penalty will be caused. Modulated I/Q branch signals are combined into DQPSK signal 109. Some transmitters are also equipped with pulse carver 111 to adjust shape of pulse. In order to ensure that the phase bias always maintains at $\pi/2$, this invention provides phase monitor 113, which consists of phase monitoring units (also called I-Q phase bias monitoring, including module squarer 114, multiplier 116 and averager 118) and phase adjust 120. Tap 110 picks up a section of signal from main signal and sends it to phase monitoring device 113. Tap 110 can adopt commercially available products (such as 1:10 optical splitter of JDS Uniphase). The key of this invention lies in phase monitor 113, while other parts are commonly known.

According to modulation theory of DQPSK, modulated signal 109 is:

$$D_I + D_Q \exp(j\theta)$$

where $D_I$ and $D_Q$ represent I-branch data 104 and Q-branch data 105 respectively, and their values are 1 and -1 (representing logic "1" and logic "0" respectively) or -1 and 1. $\theta$ represents phase of phase bias 108, and its ideal value is $\pi/2$. Suppose phase error $\delta$ exists with phase bias 108, i.e. $\theta = \pi/2 + \delta$, then signal 109 is:

$$D_I + jD_Q \exp(j\delta)$$

Module squarer 114 receives signal from tap, obtains and outputs module square of the signal (i.e. instantaneous power). The module squarer 114 can take the forms of photo-electric detectors and photo diodes in optical communication system, envelop detectors in electric communication system, squarer made of splitter and multiplier in analog circuit, and module and square calculation of DSP. For example, it can be realized via commercially available photo-electric detectors, such as that produced by Discovery Semiconductor.

Module squarer 114 calculates module square of optical signal 109, and its output 115 is as follows:

$$\begin{aligned}&\left|D_I + jD_Q \exp(j\delta)\right|^2 \\ &= \left|D_I\right|^2 + \left|D_Q\right|^2 + 2D_I D_Q \cos(\pi/2 + \delta) \\ &= 2 - 2D_I D_Q \sin(\delta)\end{aligned}$$

Multiplier is used to multiply I-branch data 104, Q-branch data 105 and output 115 of module squarer 114. Detailed implementation scheme will be discussed later. Thus output of multiplier 117 is as following:

$$\begin{aligned}&-2D_I D_Q \sin(\delta)D_I D_Q + 2D_I D_Q \\ &= -2\sin(\delta) + 2D_I D_Q\end{aligned}$$

Averager 118 obtains average value of input signals. As $D_I$ and $D_Q$ are uniformly distributed between +1 and -1, and they are mutually independent, so output 119 (phase monitoring signal) is: $-2\sin(\delta)$.

Averager 118 can adopt low pass filter eliminating high frequency elements of input signal while retaining low frequency elements carrying average value information, so as to make the averager function. Alternatively, averager can adopt DSP for average value calculation.

As $-\sin(\delta) \approx -\delta$, when $\delta \ll 1$, when phase error is very small, output 119 of averager 118 is approximately $-2\delta$.

Thus output 119 of phase monitoring device is proportion to phase error $-2\delta$. It presents both magnitude and direction of phase error. As phase monitor of this invention does not need phase dithering, defects of phase dither can be avoided. Additionally, directive of phase error signal is a constant, and this holds true even when phase error approaches zero. This means sensitiveness of phase monitoring does not decrease as the phase error decreases.

Discussion above is restricted to DQPSK transmitter, however, this invention is applicable to any I-Q quadrature modulation transmitter. According to *Principle of Modern Communications* (Cao Zhigang and Qian Yasheng, Tsinghua University Press, 1992.8), block diagram of typical I-Q quadrature modulation transmitter is similar to Figure 1. $D_I$ and $D_Q$, representing I-branch data and Q-branch data, are mutually independent and no longer restricted to 1 and -1. They can be any value, averaging 0. I-Q quadrature modulation system mentioned in this claim features the following: Unmodulated signal is divided into I-branch and Q-branch; $D_I$ and $D_Q$ are modulated separately; phase bias of Q-branch is $\pi/2$; Modulated data are combined; $D_I$ and $D_Q$ are mutually independent, with zero average value. This invention is applicable to such general I-Q quadrature modulation system. With such I-Q quadrature modulation system, signal 115 is as follows:

$$\left| D_I + jD_Q \exp(j\delta) \right|^2$$
$$= \left| D_I \right|^2 + \left| D_Q \right|^2 + 2D_I D_Q \cos(\pi/2 + \delta) \ .$$

Signal 117 is:

$$\left| D_I + jD_Q \exp(j\delta) \right|^2 D_I D_Q$$
$$= \left| D_I \right|^2 D_I D_Q + \left| D_Q \right|^2 D_I D_Q - 2\left| D_I D_Q \right|^2 \sin(\delta) \ .$$

Output 119 of averager 118 is:

$$E\left\{ \left| D_I \right|^2 D_I D_Q + \left| D_Q \right|^2 D_I D_Q - 2\left| D_I D_Q \right|^2 \sin(\delta) \right\}$$
$$= E\left\{ \left| D_I \right|^2 D_I D_Q \right\} + E\left\{ \left| D_Q \right|^2 D_I D_Q \right\} - 2\sin(\delta) E\left\{ \left| D_I D_Q \right|^2 \right\}$$

Since $D_I$ and $D_Q$ are mutually independent, so

$$= E\left\{ \left| D_I \right|^2 D_I \right\} E\left\{ D_Q \right\} + E\left\{ \left| D_Q \right|^2 D_Q \right\} E\left\{ D_I \right\} - 2\sin(\delta) E\left\{ \left| D_I D_Q \right|^2 \right\}$$

Since $D_I$ and $D_Q$ are of zero average value, so

$$E\left\{ \left| D_I \right|^2 D_I \right\} E\left\{ D_Q \right\} + E\left\{ \left| D_Q \right|^2 D_Q \right\} E\left\{ D_I \right\} - 2\sin(\delta) E\left\{ \left| D_I D_Q \right|^2 \right\}$$
$$= 0 + 0 - 2\sin(\delta) E\left\{ \left| D_I D_Q \right|^2 \right\}$$
$$= -2k\sin(\delta)$$

where k is a proportion constant greater than zero, representing average power of signal $D_I D_Q$.

Thus the result is the same as optical DQPSK, i.e., this invention is applicable to I-Q quadrature modulation system.

Besides, though not specified in the figure, technicians in this field would be aware that amplifier/filter can equipped between tap 110 and module squarer 114, between module squarer 114 and multiplier 116, between multiplier 116 and averager 118, between averager 118 and phase adjust_120, or even the other two input paths of multiplier as appropriate. Configuration of amplifier/filter is obvious to staff in this field, so it is not discussed in detail here.

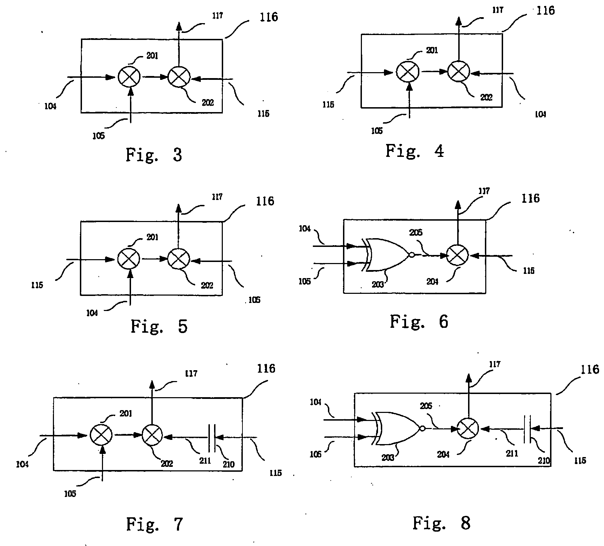

Figure 3 to Figure 16 show implementation schemes of 14 types of multipliers. As shown in Figure 3, 4 and 5, three-input multiplier 116 of this invention may be composed of two two-input multipliers 201 and 202 connected in series. The two-input multipliers can adopt commercially available components (such as mixer produced by Spectrum Microwave or DSP). In Figure 3, I-branch data 104 and Q-branch data 105 are sent to the first two-input multiplier 201, output 115 of module squarer 114 is sent to the second two-input multiplier 202, and output 117 of multiplier 116 is output of the second two-input multiplier 202. The difference between multiplier in Figure 4 and that in Figure 3 lies in that Q-branch data 105 and output 115 of module squarer 114 are sent to the first two-input multiplier 201, while I-branch data 104 is sent to the second two-input multiplier 202. The difference between multiplier in Figure 5 and that in Figure 3 lies in that I-branch data 104 and output 115 of module squarer 114 are sent to the first two-input multiplier 201, while Q-branch data 105 is sent to the second two-input multiplier 202.

When I-branch data and Q-branch data are -1 and +1 or +1 and -1 respectively, multiplier 116 of another scheme, as shown in Figure 6, can be adopted. As in Figure 6, multiplier 116 consists of NXOR gate 203 and two-input multiplier 204. Input of NXOR gate 203 is I-branch data 104 and Q-branch data 105, and input of multiplier 204 are output 205 of NXOR gate 203 and output 115 of module squarer 114 respectively. Logic table of NXOR gate is as follows:

| 104 \ 105 | Logic 0, -1 | Logic 1, 1 |
|---|---|---|
| Logic 0, -1 | Logic 1, 1 | Logic 0, -1 |
| Logic 1, 1 | Logic 0, -1 | Logic 1, 1 |

According to expression of $D_I, D_Q$, logic 0 is equivalent to data -1, and logic 1 is equivalent to data 1. According to the above table, output 205 of NXOR gate is $D_I D_Q$.
Output 117 of multiplier is:

$$-2D_I D_Q \sin(\delta) D_I D_Q + 2D_I D_Q$$
$$= -2\sin(\delta) + 2D_I D_Q$$

This is consistent with description of Figure 2.

Scheme shown in Figure 7 is similar to that in Figure 3, but a capacitor 210 is connected in series to remove DC component in input signal 115. Its output 211 is:

$$-2D_I D_Q \sin(\delta)$$

Output 117 of multiplier 116 is:

$$-2D_I D_Q \sin(\delta) \times D_I D_Q$$
$$= -2\sin(\delta)$$

Output 119 of averager is - 2sin($\delta$).

Scheme shown in Figure 8 is similar to that in Figure 6, except that capacitor 210 is connected in series. The function of capacitor 210 is similar to the one mentioned above.

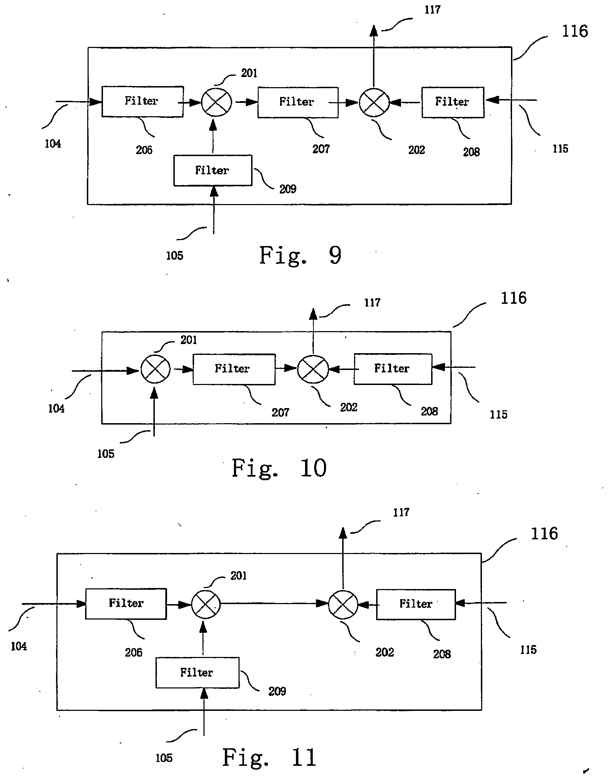

Scheme shown in Figure 9 is similar to that in Figure 3, but filter 206, 207, 208 and 209 are connected in series. Signal 104, 105 and 115 pass filters before entering two-input multipliers. Also a filter 207 is installed between the two two-input multipliers.

Scheme shown in Figure 10 is similar to that in Figure 3, but filter 207 and 208 are connected in series. Signal 115 passes filter 208 before entering the second two-input multiplier. There is also a filter 207 between the two two-input multipliers.

Scheme shown in Figure 11 is similar to that in Figure 9, but there is no filter 207 between the two two-input multipliers.

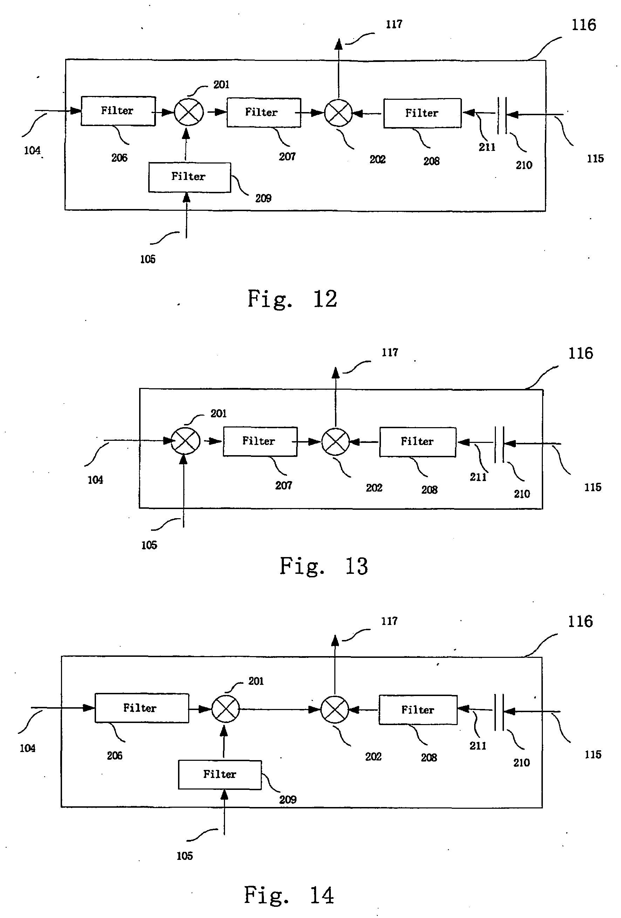

Scheme shown in Figure 12-14 are similar to those in Figure 9-11, but a capacitor 210 is connected in series respectively. The function of capacitor 210 is similar to the one mentioned above.

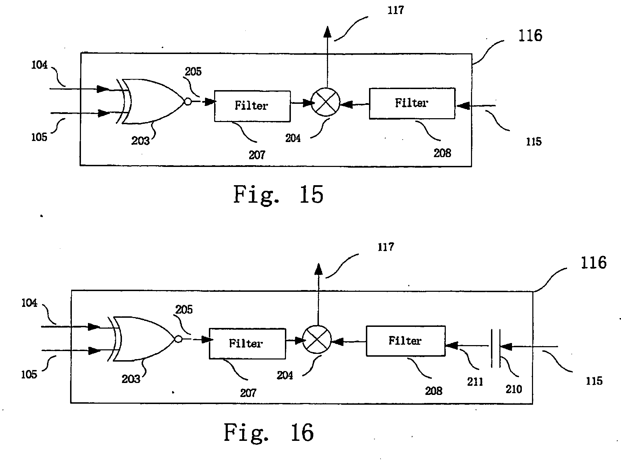

Scheme shown in Figure 15 is similar to that in Figure 6, but filter 207 and 208 are connected in series.

Scheme shown in Figure 16 is similar to that in Figure 15, but a capacitor 210 is connected in series

Obviously people in this field can configure other three-input multipliers 116 according to principle of this invention. For example, a three-input multiplier 116 can be configured based on Figure 4 and Figure 5 with capacitors and/or filter added. That is, this invention should not be limited to above exact forms.

In addition, tap 110 can also be placed after pulse carver 111 in Figure 2.

In addition, capacitors and/or amplifiers can be connected in series in any section of circuit before multiplier 116.

After the phase monitor, monitoring signal 119 is sent to phase adjust 120. When input signal of phase adjust 120 is greater than 0, phase increases; when it is smaller than 0, phase decreases; when it equals to 0, phase remains unchanged. This can be done by changing the DC bias of phase bias 108, which is shown as LiNbO$_3$ DQPSK modulator produced by Sumitomo Osaka Cement.

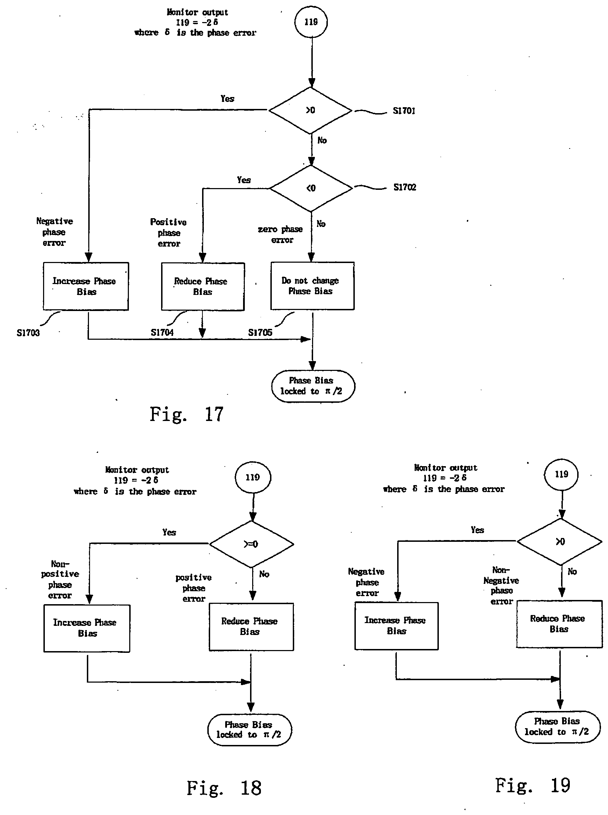

Figure 17-19 show phase control method of this invention.

As shown in Figure 17, when phase bias has a negative phase error, i.e. the phase bias is $\pi/2 + \delta$ and $\delta < 0$, phase monitoring signal 119 is $-2\delta > 0$ (Procedure S1701, yes). Phase adjust 120 increase phase bias (Procedure S1703), so that phase moves towards target value $\pi/2$. On the other hand, when phase monitoring signal 119 is not greater than 0 (Procedure S1701, no), judge whether it is smaller than 0 (Procedure S1702). When phase bias has a positive phase error, i.e. the phase bias is $\pi/2 + \delta$ and $\delta > 0$, phase monitor's output 119 is $-2\delta < 0$ (Procedure S1702, yes). Phase adjust 120 decreases phase of phase bias 108 (Procedure S1704), so that phase moves towards target value $\pi/2$. When phase error is 0 (Procedure S1702, no), phase monitoring signal is zero, phase adjust makes no action (S1705) and phase stays at the target value.

Figure 18 is similar to Figure 17, but condition for 0 phase error is combined with condition for negative phase error, making non-positive phase error condition. Figure 19 is similar to Figure 17, but condition for 0 phase error is combined with condition for positive phase error, making non-negative phase error condition. When phase monitoring signal is 0, the phase adjust is 0, so above combination does not obstruct phase control. If a fixed step exists for phase adjust, then the phase bias will oscillate around the optimal value with amplitude equal to step of phase adjust. If the step is small enough, such oscillation is acceptable.

Obviously, when an invertor exists between averager 118 and phase adjust 120, adjust direction of phase adjust 120 will be opposite to output phase direction of averager 118. Thus proper direction shall be defined as: when direction of output phase of averager 118 is positive (sometimes phase may be 0, if the context suggests so), proper direction refers to proper adjust direction of phase adjust 120; when direction of output phase of averager 118 is negative (sometimes phase may be 0, if the context suggests so), proper adjust direction of phase adjust 120 is called another proper direction.

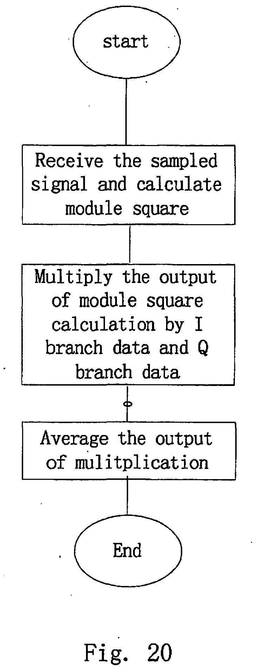

Additionally, this invention also provides an I-Q phase bias monitoring method which is used for (but not limited to) I-Q quadrature modulation system, such as Differential Quadrature Phase-Shift Key (DQPSK), Quadrature Phase-Shift Key (QPSK), Multi Phase-Shift Key (M-PSK), Differential Multi Phase-Shift Key (DM-PSK) and Quadrature Amplitude Modulation(QAM) system. Figure 20 shows the flow of monitoring method.

As shown in Figure 20, I-Q phase bias monitoring method of this invention consists of following procedures: Module square calculation procedure that receives signal from tap and uses module squarer 114 shown in Figure 2 to calculate module square of sample signal; Multiplication procedure that multiplies data of I-branch, data of Q-branch and output of said module square calculation procedure. This can be executed by the various types of multipliers shown in Figure 3-16. That is, this procedure can be divided into the first multiplication operation and the second multiplication operation (shown in Figure 3-5, Figure 7 and Figure 9-14). When I-branch data and Q-branch data are +1/-1 and -1/+1 respectively, this procedure can also be divided into NXOR operation and NXOR multiplication operation (as shown in Figure 6, Figure 8 and Figure 15-16). Furthermore, as shown in the figures, this procedure may also include such procedures as filtering, direct current removal, amplification and etc; and Averaging procedure that averages the output of multiplication procedure.

Furthermore, the said method also includes phase adjust procedure, following which phase of phase bias is adjusted according to Figure 17-19 and methods described above.

As per implementation example of this invention, this invention provides an I-Q quadrature modulation transmitter which consists of I-branch, Q-branch equipped with phase bias, tap and I-Q phase bias monitor installed between tap and phase bias for monitor the phase error of phase bias. The I-Q phase bias monitor is characterized by the following components: Module squarer, receiving signal from tap and outputting module square of the signal; Multiplier, multiplying data of I-branch, data of Q-branch and output of module squarer; and Averager, averaging the output of multiplier.

Multiplier mentioned can adopt the forms shown in Figure 3 to Figure 16.

The I-Q quadrature modulation transmitter is one of Differential Quadrature Phase-Shift Key system, Quadrature Phase-Shift Key system, Multi Phase-Shift Key system, Differential Multi Phase-Shift Key system or Quadrature Amplitude Modulation system.

Furthermore, in terms of implementation of this invention, the purpose of this invention can also be achieved by computer programs running on a computer or single chip machine. For example, for I-Q quadrature modulation transmitter consisting of I-branch, Q-branch equipped with phase bias, and tap, computer programs can enable CPU or single chip machine to execute the following operations: Module square calculation operation, receiving signal from tap and calculating module square of the signal; Multiplication operation, multiplying data of I-branch, data of Q-branch and output of square calculation operation; and Averaging operation, averaging output values of the multiplication operation.

That is, in implementation cases, an action can be performed via special circuit (e.g. discrete logic gates interconnected to perform special functions), programs executed by one or more processors, or combination of the two. Therefore, the invention can be implemented in a number of different modes, all of which should be considered as within the scope of description herein. Any implementation mode here can be referred to as "logic configured to execute an action" or "logic executing or capable of executing an action" alternatively.

Similarly, computer and single chip machine may also be used to perform such operations as filtering, direct current removal and amplification.

Furthermore, in terms of implementation of this invention, the purpose of this invention can also be achieved via computer-readable medium, in which programs mentioned above are stored. Computer-readable medium can be any device capable of holding, storing, delivering, spreading or transferring programs, to be used by instruction execution systems, equipments or facilities, or be integrated with such execution systems, equipments or facilities. The computer-readable medium includes but not limited to electronic, magnetic, optical, electromagnetic, infrared and semiconductor systems, devices and transfer media. Some more detailed examples includes, not intended to be exhaustive, electric connection with one or more lead wires, portable computer disks, RAM, ROM, EPROM or FlashRom, optical fiber and portable CDROM, etc.

Above implementations of this invention are for demonstration and explanation purpose only. They are not intended to exhaust or limit this invention to the above exact forms. For those in this field, many modifications and variations are obvious. The implementation cases selected and described are used to better explain the principles and applications of this invention, so that other technical staff in this field may better understand the various implementation cases and their variations for specific situations. It shall be understood that the scope of this invention is restricted by the invention claims.

**Claims**

1. An apparatus configured to observe phase bias between In-phase-Quadrature, I-Q, branches for an I-Q quadrature modulation transmitter, said I-Q quadrature modulation transmitter comprising an I branch, a Q branch having a phase bias device (108), and a feedback device (110), said feedback device (110) being configured to feedback modulated signals from the I branch and the Q branch, said apparatus being mounted between said feedback device (110) and said phase bias device (108); said phase bias device (108) being configured to providing a phase bias of $\pi/2$ between the I branch and the Q branch, the apparatus comprising:

   a module squaring device (114) configured to receive a signal from said feedback device (110) and outputting the square of the module of said signal;
   a multiplier (116) configured to multiply the data of said I branch by the data of said Q branch by the output of said module squaring device (114); and
   an averager (118) configured to average the output of said multiplier,

   wherein the output of the averager (118), being proportional to a phase error, is used for adjusting the phase of said phase bias device so as to lock the phase bias to $\pi/2$.

2. The apparatus as claimed in claim 1, further comprising one or more amplifier (s) and/or filter(s) placed in series between said multiplier (116) and averager (118), between said multiplier (116) and module squaring device (114), behind said averager (118) or before said module squaring device (114).

3. The apparatus as claimed in claim 1, wherein said I-Q quadrature modulation transmitter further comprises a pulse carver (111) placed before or behind said feedback device (110).

4. The apparatus of phase bias between I-Q branches as claimed in claim 1, wherein said I-Q quadrature modulation transmitter further comprises a phase adjustor (120) configured to adjust the phase of said phase bias device according to the output of said monitoring apparatus of phase bias.

5.  The apparatus of phase bias between I-Q branches as claimed in claim 2, wherein said I-Q quadrature modulation transmitter further comprises a phase adjustor (120) configured to adjust the phase of said phase bias device according to the output of said monitoring apparatus of phase bias.

6.  The apparatus as claimed in claim 1, wherein said I-Q quadrature modulation transmitter is one from a differential quaternary phase shift keying system transmitter, a quaternary phase shift keying system transmitter, a multiple-phase shift keying system transmitter, a differential multiple-phase shift keying system transmitter and a quadrature modulation system transmitter.

7.  The apparatus as claimed in any one of claims 1-5, wherein said multiplier (116) is a three-input multiplier comprising two two-input multipliers (201, 202) arranged in series.

8.  The apparatus as claimed in any one of claims 1-5, wherein the data of said I branch and the data of said Q branch are respectively +1 and -1 or -1 and +1, that said multiplier (116) is a three-input multiplier comprising an XOR gate and a two-input multiplier arranged in series, that the data of said I branch and the data of said Q branch are inputted into said XOR gate, and that the output of said XOR gate and the output of said module squaring device are inputted into said two-input multiplier.

9.  The apparatus as claimed in claim 7, wherein one or more filter(s) (206, 207, 208, 209) is/are placed in series between said two two-input multipliers and/or before each of said two-input multipliers.

10.  The apparatus as claimed in claim 8, wherein a filter (206, 207, 208) is placed in series before and/or behind said two-input multiplier.

11.  The apparatus as claimed in claim 7, wherein a capacitor (210) is placed in series on the path along which the output of said module squaring device is inputted into said two-input multiplier.

12.  The apparatus as claimed in claim 9, wherein a capacitor (210) is placed in series on the path along which the output of said module squaring device is inputted into said two-input multiplier.

13.  The apparatus as claimed in claim 8, wherein a capacitor (210) is placed in series on the path along which the output of said module squaring device is inputted into said two-input multiplier.

14.  The apparatus as claimed in claim 10, wherein a capacitor (210) is placed in series on the path along which the output of said module squaring device is inputted into said two-input multiplier.

15.  A method for observing phase bias between In-phase-Quadrature, I-Q, branches for an I-Q quadrature modulation transmitter, said I-Q quadrature modulation transmitter comprising an I branch, a Q branch having a phase bias device, and a feedback device, said phase bias device being configured to providing a phase bias of $\pi/2$ between the I branch and the Q branch, said feedback device being configured to feedback modulated signals from the I branch and the Q branch; the method comprising:

    a module square calculating step for receiving a signal from said feedback device and calculating the square of the module of said signal received;
    a multiplying step for multiplying the data of said I branch by the data of said Q branch by the output of said module square calculating step; and
    an averaging step for averaging the output of said multiplying step,
    wherein the output of the averaging step, being proportional to a phase error, is used for adjusting the phase of said phase bias device so as to lock the phase bias to $\pi/2$.

16.  The method as claimed in claim 15, further comprising one or more amplifying and/or filtering step (s) between said multiplying and averaging steps, between said multiplying and module square calculating steps, after said averaging step or before said module square calculating step.

17.  The method as claimed in claim 16, wherein said multiplying step comprises a first multiplying step for multiplying any two among of three inputs of the data of said I branch, the data of said Q branch and the output of said module square calculating step, and a second multiplying step for multiplying the result of said first multiplying step with the remained one of the three inputs.

18. The method as claimed in claim 15, wherein said I branch data and said Q branch data are respectively +1 and -1 or-1 and +1, and that said multiplying step comprises an XOR step for carrying out XOR with respect to said I branch data and said Q branch data, and a step for multiplying the result of said XOR step and the output of said module square calculating step.

19. The method as claimed in claim 17, further comprising one or more filtering step (s) between said first and second multiplying steps and/or before said first and second multiplying steps.

20. The method as claimed in claim 18, further comprising a filtering step before and/or after said multiplying step.

21. The method as claimed in any one of claims 15-20, further comprising a step of removing the direct current of the output of said module square calculating step before multiplying it.

22. The method of phase bias between I-Q branches as claimed in any one of claims 15-20, wherein said I-Q quadrature modulation transmitter further comprises a phase adjustor (120) for adjusting the phase of said phase bias device according to the output of said averaging step.

23. The method as claimed in claim 22, wherein said phase adjustor performs a phase error direction adjustment when the output of said averaging step is positive, performs another phase error direction adjustment when the output of said averaging step is negative, and performs no phase adjustment when the output of said averaging step is zero.

24. The method as claimed in claim 22, wherein said phase adjustor performs a phase error direction adjustment when the output of said averaging step is positive, and performs another phase error direction adjustment when the output of said phase error averaging step is not positive.

25. The method as claimed in claim 22, wherein said phase adjustor performs an another phase error direction adjustment when the output of said averaging step is negative, and performs a phase error direction adjustment when the output of said averaging step is not negative.

26. The method as claimed in any one of claims 15-20, wherein said I-Q quadrature modulation transmitter is one from a differential quaternary phase shift keying system transmitter, a quaternary phase shift keying system transmitter, a multiple-phase shift keying system transmitter, a differential multiple-phase shift keying system transmitter and a quadrature modulation system transmitter.

27. The method as claimed in claim 21, wherein said I-Q quadrature modulation transmitter is one from a differential quaternary phase shift keying system transmitter, a quaternary phase shift keying system transmitter, a multiple-phase shift keying system transmitter, a differential multiple-phase shift keying system transmitter and a quadrature modulation system transmitter.

28. The method as claimed in claim 22, wherein said I-Q quadrature modulation transmitter is one from a differential quaternary phase shift keying system transmitter, a quaternary phase shift keying system transmitter, a multiple-phase shift keying system transmitter, a differential multiple-phase shift keying system transmitter and a quadrature modulation system transmitter.

29. A In-phase-Quadrature, I-Q, quadrature modulation transmitter, comprising an I branch, a Q branch having a phase bias device (108), a feedback device (110), and the apparatus adapted to observe phase bias between I-Q branches mounted between said feedback device (110) and said phase bias device (108) as claimed in any of the claims 1 to 14.

**Patentansprüche**

1. Vorrichtung, die konfiguriert ist, um eine Phasenvorspannung zwischen In-Phasen-Quadratur-, I-Q-Zweigen, für einen I-Q-Quadraturmodulationssender zu überwachen, wobei der I-Q-Quadraturmodulationssender einen I-Zweig umfasst, einen Q-Zweig, der eine Phasenvorspannungseinrichtung (108) hat, und eine Rückkopplungseinrichtung (110), wobei die Rückkopplungseinrichtung (110) konfiguriert ist, um modulierte Signale aus dem I-Zweig und dem Q-Zweig rückzukoppeln, wobei die Vorrichtung zwischen der Rückkopplungseinrichtung (110) und der Phasenvorspannungseinrichtung (108) montiert ist; wobei die Phasenvorspannungseinrichtung (108) konfiguriert ist, um eine Phasenvorspannung von π/2 zwischen dem I-Zweig und dem Q-Zweig bereitzustellen, wobei die Vorrichtung umfasst:

eine Modul-Quadriereinrichtung (114), die konfiguriert ist, um ein Signal aus der Rückkopplungseinrichtung (110) zu empfangen und das Quadrat des Moduls des Signals auszugeben;
einen Multiplikator (116), der konfiguriert ist, um die Daten aus dem I-Zweig mit den Daten aus dem Q-Zweig mit der Ausgabe der Modul-Quadriereinrichtung (114) zu multiplizieren; und
einen Mittelwertbildner (118), der konfiguriert ist, um die Ausgabe des Multiplikators zu Mitteln,
wobei die Ausgabe des Mittelwertbildners (118), die proportional zu einem Phasenfehler ist, so zum Angleichen der Phase der Phasenvorspannungseinrichtung verwendet wird, dass die Phasenvorspannung auf π/2 festgesetzt ist.

2. Vorrichtung nach Anspruch 1, ferner umfassend einen oder mehrere Verstärker und/oder Filter, die in Serie zwischen dem Multiplikator (116) und dem Mittelwertbildner (118), zwischen dem Multiplikator (116) und der Modul-Quadriereinrichtung (114), hinter dem Mittelwertbildner (118) oder vor der Modul-Quadriereinrichtung (114) angeordnet sind.

3. Vorrichtung nach Anspruch 1, wobei der I-Q-Quadraturmodulationssender ferner einen Puls-Carver (111) umfasst, der vor oder hinter der Rückkopplungseinrichtung (110) platziert ist.

4. Vorrichtung zur Phasenvorspannung zwischen I-Q Zweigen nach Anspruch 1, wobei der I-Q-Quadraturmodulationssender ferner einen Phasenangleicher (120) umfasst, der konfiguriert ist, um die Phase der Phasenvorspannungseinrichtung gemäß der Ausgabe der Überwachungsvorrichtung der Phasenvorspannung anzugleichen.

5. Vorrichtung zur Phasenvorspannung zwischen I-Q Zweigen nach Anspruch 2, wobei der I-Q-Quadraturmodulationssender ferner einen Phasenangleicher (120) umfasst, der konfiguriert ist, um die Phase der Phasenvorspannungseinrichtung gemäß der Ausgabe der Überwachungsvorrichtung der Phasenvorspannung anzugleichen.

6. Vorrichtung nach Anspruch 1, wobei der I-Q- Quadraturmodulationssender einer ist aus einem differentiellen quaternären Phasenumtastungssystem-Sender, einem quaternären Phasenumtastungssystem-Sender, einem Mehrphasenumtastungssystem-Sender, einem differentiellen Mehrphasenumtastungssystem-Sender und einem Quadraturmodulationssystem-Sender.

7. Vorrichtung nach einem der Ansprüche 1 bis 5, wobei der Multiplikator (116) ein Dreieingangs-Multiplikator ist, zwei Zweieingangs-Multiplikatoren (201, 202) umfassend, die in Serie angeordnet sind.

8. Vorrichtung nach einem der Ansprüche 1 bis 5, wobei die Daten des I-Zweigs und die Daten des Q-Zweigs jeweils +1 und -1 oder -1 und +1 sind, dass der Multiplikator (116) ein Dreieingangs-Multiplikator ist, ein XOR-Gate umfassend und einen in Serie angeordneten Zweieingangs-Multiplikator, dass die Daten des I-Zweigs und die Daten des Q-Zweigs in das XOR-Gate eingegeben werden, und dass die Ausgabe des XOR-Gates und die Ausgabe der Modul-Quadriereinrichtung in den Zweieingangs-Multiplikator eingegeben werden.

9. Vorrichtung nach Anspruch 7, wobei ein oder mehrere Filter (206, 207, 208, 209) zwischen den zwei Zweieingangs-Multiplikatoren und/oder vor jedem der Zweieingangs-Multiplikatoren in Serie angeordnet ist/sind.

10. Vorrichtung nach Anspruch 8, wobei ein Filter (206, 207, 208) vor und/oder hinter dem Zweieingangs-Multiplikator in Serie angeordnet ist.

11. Vorrichtung nach Anspruch 7, wobei ein Kondensator (210) in Serie an dem Pfad angeordnet ist, dem entlang die Ausgabe der Modul-Quadriereinrichtung in den Zweieingangs-Multiplikator eingegeben wird.

12. Vorrichtung nach Anspruch 9, wobei ein Kondensator (210) in Serie an dem Pfad angeordnet ist, dem entlang die Ausgabe der Modul-Quadriereinrichtung in den Zweieingangs-Multiplikator eingegeben wird.

13. Vorrichtung nach Anspruch 8, wobei ein Kondensator (210) in Serie an dem Pfad angeordnet ist, dem entlang die Ausgabe der Modul-Quadriereinrichtung in den Zweieingangs-Multiplikator eingegeben wird.

14. Vorrichtung nach Anspruch 10, wobei ein Kondensator (210) in Serie an dem Pfad angeordnet ist, dem entlang die Ausgabe der Modul-Quadriereinrichtung in den Zweieingangs-Multiplikator eingegeben wird.

15. Verfahren zum Überwachen einer Phasenvorspannung zwischen In-Phasen-Quadratur-, I-Q-Zweigen für einen I-Q-Quadraturmodulationssender, wobei der I-Q-Quadraturmodulationssender einen I-Zweig umfasst, einen Q-Zweig mit einer Phasenvorspannungseinrichtung, und eine Rückkopplungseinrichtung, wobei die Phasenvorspannungseinrichtung konfiguriert ist, um eine Phasenvorspannung von $\pi/2$ zwischen dem I-Zweig und dem Q-Zweig bereitzustellen, wobei die Rückkopplungseinrichtung konfiguriert ist, um modulierte Signale aus dem I-Zweig und dem Q-Zweig rückzukoppeln; wobei das Verfahren umfasst:

einen Modulquadrier-Berechnungsschritt zum Empfangen eines Signals aus der Rückkopplungseinrichtung und Berechnen des Quadrats des Moduls des empfangenen Signals;
einen Multiplikationsschritt zum Multiplizieren der Daten aus dem I-Zweig mit den Daten aus dem Q-Zweig mit der Ausgabe aus dem Modulquadrier-Berechnungsschritt; und
einen Mittelwertbildungsschritt zum Mitteln der Ausgabe des Multiplikationsschritts,
wobei die Ausgabe aus dem Mittelwertbildungsschritt, die zu einem Phasenfehler proportional ist, zum Angleichen der Phase aus der Phasenvorspannungseinrichtung verwendet wird, um die Phasenvorspannung auf $\pi/2$ festzusetzen.

16. Verfahren nach Anspruch 15, ferner einen oder mehrere Verstärkungs- und/oder Filterungsschritt(e) zwischen den Multiplikations- und Mittelwertbildungsschritten, zwischen den Multiplikations- und Modulquadrier-Berechnungsschritten, nach dem Mittelwertbildungsschritt oder vor dem Modulquadrier-Berechnungsschritt umfassend.

17. Verfahren nach Anspruch 16, wobei der Multiplikationsschritt einen ersten Multiplikationsschritt zum Multiplizieren zwei beliebige aus drei Eingaben der Daten aus dem I-Zweig, der Daten aus dem Q-Zweig und der Ausgabe des Modulquadrier-Berechnungsschritts, und einen zweiten Multiplikationsschritt zum Multiplizieren des Ergebnisses aus dem ersten Multiplikationsschritt mit der verbleibenden aus den drei Eingaben umfasst.

18. Verfahren nach Anspruch 15, wobei die I-Zweig Daten und die Q-Zweig Daten jeweils +1 und -1 oder -1 und +1 sind, und dass der Multiplikationsschritt einen XOR-Schritt zum Ausführen von XOR umfasst in Bezug auf die I-Zweig Daten und die Q-Zweig Daten, und einen Schritt zum Multiplizieren des Ergebnisses aus dem XOR-Schritt und der Ausgabe des Modulquadrier-Berechnungsschritts.

19. Verfahren nach Anspruch 17, ferner umfassend einen oder mehrere Filterungsschritt(e) zwischen den ersten und zweiten Multiplikationsschritten und/oder vor den ersten und zweiten Multiplikationsschritten.

20. Verfahren nach Anspruch 18, ferner umfassend einen Filterungsschritt vor und/oder nach dem Multiplikationsschritt.

21. Verfahren nach einem der Ansprüche 15 bis 20, ferner umfassend einen Schritt des Entfernens des Gleichstroms aus der Ausgabe des Modulquadrier-Berechnungsschritts bevor dieser multipliziert wird.

22. Verfahren zur Phasenvorspannung zwischen I-Q Zweigen nach einem der Ansprüche 15 bis 20, wobei der I-Q-Quadraturmodulationssender ferner einen Phasenangleicher (120) zum Angleichen der Phase der Phasenvorspannungseinrichtung entsprechend der Ausgabe aus dem Mittelwertbildungsschritt umfasst.

23. Verfahren nach Anspruch 22, wobei der Phasenangleicher eine Phasenfehler-Richtungsangleichung durchführt, wenn die Ausgabe des Mittelwertbildungsschritts positiv ist, eine weitere Phasenfehler-Richtungsangleichung durchführt, wenn die Ausgabe des Mittelwertbildungsschritts negativ ist, und keine Phasenangleichung durchführt, wenn die Ausgabe aus dem Mittelwertbildungsschritts Null ist.

24. Verfahren nach Anspruch 22, wobei der Phasenangleicher eine Phasenfehler-Richtungsangleichung durchführt, wenn die Ausgabe des Mittelwertbildungsschritts positiv ist, und eine weitere Phasenfehler-Richtungsangleichung durchführt, wenn die Ausgabe des Phasenfehler-Mittelwertbildungsschritts nicht positiv ist.

25. Verfahren nach Anspruch 22, wobei der Phasenangleicher eine weitere Phasenfehler-Richtungsangleichung durchführt, wenn die Ausgabe aus dem Mittelwertbildungsschritts negativ ist, und eine Phasenfehler-Richtungsangleichung durchführt, wenn die Ausgabe aus dem Mittelwertbildungsschritts nicht negativ ist.

**26.** Verfahren nach einem der Ansprüche 15 bis 20, wobei der I-Q-Quadraturmodulationssender einer ist aus einem differentiellen quaternären Phasenumtastungssystem-Sender, einem quaternären Phasenumtastungssystem-Sender, einem Mehrphasenumtastungssystem-Sender, einem differentiellen Mehrphasenumtastungssystem-Sender und einem Quadraturmodulationssystemsender.

**27.** Verfahren nach Anspruch 21, wobei der I-Q-Quadraturmodulationssender einer ist aus einem differentiellen quaternären Phasenumtastungssystem-Sender, einem quaternären Phasenumtastungssystem-Sender, einem Mehrphasenumtastungssystem-Sender, einem differentiellen Mehrphasenumtastungssystem-Sender und einem Quadraturmodulationssystemsender.

**28.** Verfahren nach Anspruch 22, wobei der I-Q-Quadraturmodulationssender einer ist aus einem differentiellen quaternären Phasenumtastungssystem-Sender, einem quaternären Phasenumtastungssystem-Sender, einem Mehrphasenumtastungssystem-Sender, einem differentiellen Mehrphasenumtastungssystem-Sender und einem Quadraturmodulationssystemsender.

**29.** In-Phasen-Quadratur-, I-Q-Quadraturmodulationssender, einen I-Zweig, einen Q-Zweig mit einer Phasenvorspannungseinrichtung (108), einer Rückkopplungseinrichtung (110) umfassend, und die Vorrichtung, die angepasst ist, die Phasenvorspannung zwischen I-Q Zweigen, die zwischen der Rückkopplungseinrichtung (110) und der Phasenvorspannungseinrichtung (108) montiert sind, nach einem der Ansprüche 1 bis 14, zu überwachen.

## Revendications

**1.** Appareil configuré pour une observation d'une polarisation de phase entre des branches en quadrature en phase, I-Q, pour un transmetteur de modulation en quadrature I-Q, ledit transmetteur de modulation en quadrature I-Q comprenant une branche I, une branche Q présentant un dispositif de polarisation de phase (108), et un dispositif de retour (110), ledit dispositif de retour (110) étant configuré pour un retour de signaux modulés à partir de la branche I et de la branche Q, ledit appareil étant monté entre ledit dispositif de retour (110) et ledit dispositif de polarisation de phase (108) ; ledit dispositif de polarisation de phase (108) étant configuré pour une fourniture d'une polarisation de phase de $\pi/2$ entre la branche I et la branche Q, l'appareil comprenant :

un dispositif de mise au carré de module (114) configuré pour une réception d'un signal à partir dudit dispositif de retour (110) et pour délivrer en sortie le carré du module dudit signal ;
un multiplicateur (116) configuré pour une multiplication des données de ladite branche I par les données de ladite branche Q par la sortie dudit dispositif de mise au carré de module (114) ; et
un moyenneur (118) configuré pour un calcul de moyenne de la sortie dudit multiplicateur,
dans lequel la sortie du moyenneur (118), étant proportionnelle à une erreur de phase, est utilisée pour un ajustement de la phase dudit dispositif de polarisation de phase afin de verrouiller la polarisation de phase sur n/2.

**2.** Appareil selon la revendication 1, comprenant en outre un ou plusieurs amplificateur(s) et/ou filtre(s) disposés en série entre lesdits multiplicateur (116) et moyenneur (118), entre lesdits multiplicateur (116) et dispositif de mise au carré de module (114), derrière ledit moyenneur (118) ou avant ledit dispositif de mise au carré de module (114).

**3.** Appareil selon la revendication 1, dans lequel ledit transmetteur de modulation en quadrature I-Q comprend en outre un découpeur d'impulsion (111) disposé avant ou derrière ledit dispositif de retour (110).

**4.** Appareil de polarisation de phase entre des branches I-Q selon la revendication 1, dans lequel ledit transmetteur de modulation en quadrature I-Q comprend en outre un ajusteur de phase (120) configuré pour un ajustement de la phase dudit dispositif de polarisation de phase selon la sortie dudit appareil de contrôle de polarisation de phase.

**5.** Appareil de polarisation de phase entre des branches I-Q selon la revendication 2, dans lequel ledit transmetteur de modulation en quadrature I-Q comprend en outre un ajusteur de phase (120) configuré pour un ajustement de la phase dudit dispositif de polarisation de phase selon la sortie dudit appareil de contrôle de polarisation de phase.

**6.** Appareil selon la revendication 1, dans lequel ledit transmetteur de modulation en quadrature I-Q est un parmi un transmetteur de système de modulation par déplacement de phase quaternaire différentielle, un transmetteur de système de modulation par déplacement de phase quaternaire, un transmetteur de système de modulation multiphasée, un transmetteur de système de modulation multiphasée différentielle et un transmetteur de système de modulation en quadrature.

7.  Appareil selon l'une quelconque des revendications 1-5, dans lequel ledit multiplicateur (116) est un multiplicateur à trois entrées comprenant deux multiplicateurs à deux entrées (201, 202) agencés en série.

8.  Appareil selon l'une quelconque des revendications 1-5, dans lequel les données de ladite branche I et les données de ladite branche Q sont respectivement +1 et -1 ou - 1 et +1, que ledit multiplicateur (116) est un multiplicateur à trois entrées comprenant une porte OU exclusif et un multiplicateur à deux entrées agencés en série, que les données de ladite branche I et les données de ladite branche Q sont entrées dans ladite porte OU exclusif, et que la sortie de ladite porte OU exclusif et la sortie dudit dispositif de mise au carré de module sont entrées dans ledit multiplicateur à deux entrées.

9.  Appareil selon la revendication 7, dans lequel un ou plusieurs filtre(s) (206, 207, 208, 209) sont disposés en série entre lesdits deux multiplicateurs à deux entrées et/ou avant chacun desdits multiplicateurs à deux entrées.

10. Appareil selon la revendication 8, dans lequel un filtre (206, 207, 208) est disposé en série avant et/ou derrière ledit multiplicateur à deux entrées.

11. Appareil selon la revendication 7, dans lequel un condensateur (210) est disposé en série sur la voie le long de laquelle la sortie dudit dispositif de mise au carré de module est entrée dans ledit multiplicateur à deux entrées.

12. Appareil selon la revendication 9, dans lequel un condensateur (210) est disposé en série sur la voie le long de laquelle la sortie dudit dispositif de mise au carré de module est entrée dans ledit multiplicateur à deux entrées.

13. Appareil selon la revendication 8, dans lequel un condensateur (210) est disposé en série sur la voie le long de laquelle la sortie dudit dispositif de mise au carré de module est entrée dans ledit multiplicateur à deux entrées.

14. Appareil selon la revendication 10, dans lequel un condensateur (210) est disposé en série sur la voie le long de laquelle la sortie dudit dispositif de mise au carré de module est entrée dans ledit multiplicateur à deux entrées.

15. Procédé pour une observation de polarisation de phase entre des branches en quadrature en phase, I-Q, pour un transmetteur de modulation en quadrature I-Q, ledit transmetteur de modulation en quadrature I-Q comprenant une branche I, une branche Q présentant un dispositif de polarisation de phase, et un dispositif de retour, ledit dispositif de polarisation de phase étant configuré pour une fourniture d'une polarisation de phase de n/2 entre la branche I et la branche Q, ledit dispositif de retour étant configuré pour un retour de signaux modulés à partir de la branche I et de la branche Q; le procédé comprenant :

      une étape de calcul de carré de module pour une réception d'un signal à partir dudit dispositif de retour et un calcul du carré du module dudit signal reçu ;
      une étape de multiplication pour une multiplication des données de ladite branche I par les données de ladite branche Q par la sortie de ladite étape de calcul de carré de module ; et
      une étape de calcul de moyenne pour un calcul de moyenne de la sortie de ladite étape de multiplication, dans lequel la sortie de l'étape de calcul de moyenne, étant proportionnelle à une erreur de phase, est utilisée pour un ajustement de la phase dudit dispositif de polarisation de phase afin de verrouiller la polarisation de phase sur n/2.

16. Procédé selon la revendication 15, comprenant en outre une ou plusieurs étape(s) d'amplification et/ou de filtrage entre lesdites étapes de multiplication et de calcul de moyenne, entre lesdites étapes de multiplication et de calcul de carré de module, après ladite étape de calcul de moyenne ou avant ladite étape de calcul de carré de module.

17. Procédé selon la revendication 16, dans lequel ladite étape de multiplication comprend une première étape de multiplication pour une multiplication de deux quelconques parmi trois entrées des données de ladite branche I, des données de ladite branche Q et de la sortie de ladite étape de calcul de carré de module, et une seconde étape de multiplication pour une multiplication du résultat de ladite première étape de multiplication avec celle restante des trois entrées.

18. Procédé selon la revendication 15, dans lequel lesdites données de branche I et lesdites données de branche Q sont respectivement +1 et -1 ou -1 et +1, et ladite étape de multiplication comprend une étape OU exclusif pour une exécution d'un OU exclusif par rapport auxdites données de branche I et auxdites données de branche Q, et une étape pour une multiplication du résultat de ladite étape OU exclusif avec la sortie de ladite étape de calcul de carré de module.

**19.** Procédé selon la revendication 17, comprenant en outre une ou plusieurs étape(s) de filtrage entre lesdites première et seconde étapes de multiplication et/ou avant lesdites première et seconde étapes de multiplication.

**20.** Procédé selon la revendication 18, comprenant en outre une étape de filtrage avant et/ou après ladite étape de multiplication.

**21.** Procédé selon l'une quelconque des revendications 15-20, comprenant en outre une étape de retrait du courant continu de la sortie de ladite étape de calcul de carré de module avant de la multiplier.

**22.** Procédé de polarisation de phase entre des branches I-Q selon l'une quelconque des revendications 15-20, dans lequel ledit transmetteur de modulation en quadrature I-Q comprend en outre un ajusteur de phase (120) pour un ajustement de la phase dudit dispositif de polarisation de phase selon la sortie de ladite étape de calcul de moyenne.

**23.** Procédé selon la revendication 22, dans lequel ledit ajusteur de phase réalise un ajustement de direction d'erreur de phase lorsque la sortie de ladite étape de calcul de moyenne est positive, réalise un autre ajustement de direction d'erreur de phase lorsque la sortie de ladite étape de calcul de moyenne est négative, et ne réalise aucun ajustement de phase lorsque la sortie de ladite étape de calcul de moyenne est nulle.

**24.** Procédé selon la revendication 22, dans lequel ledit ajusteur de phase réalise un ajustement de direction d'erreur de phase lorsque la sortie de ladite étape de calcul de moyenne est positive, et réalise un autre ajustement de direction d'erreur de phase lorsque la sortie de ladite étape de calcul de moyenne d'erreur de phase n'est pas positive.

**25.** Procédé selon la revendication 22, dans lequel ledit ajusteur de phase réalise un autre ajustement de direction d'erreur de phase lorsque la sortie de ladite étape de calcul de moyenne est négative, et réalise un ajustement de direction d'erreur de phase lorsque la sortie de ladite étape de calcul de moyenne n'est pas négative.

**26.** Procédé selon l'une quelconque des revendications 15-20, dans lequel ledit transmetteur de modulation en quadrature I-Q est un parmi un transmetteur de système de modulation par déplacement de phase quaternaire différentielle, un transmetteur de système de modulation par déplacement de phase quaternaire, un transmetteur de système de modulation multiphasée, un transmetteur de système de modulation multiphasée différentielle et un transmetteur de système de modulation en quadrature.

**27.** Procédé selon la revendication 21, dans lequel ledit transmetteur de modulation en quadrature I-Q est un parmi un transmetteur de système de modulation par déplacement de phase quaternaire différentielle, un transmetteur de système de modulation par déplacement de phase quaternaire, un transmetteur de système de modulation multiphasée, un transmetteur de système de modulation multiphasée différentielle et un transmetteur de système de modulation en quadrature.

**28.** Procédé selon la revendication 22, dans lequel ledit transmetteur de modulation en quadrature I-Q est un parmi un transmetteur de système de modulation par déplacement de phase quaternaire différentielle, un transmetteur de système de modulation par déplacement de phase quaternaire, un transmetteur de système de modulation multiphasée, un transmetteur de système de modulation multiphasée différentielle et un transmetteur de système de modulation en quadrature.

**29.** Transmetteur de modulation en quadrature en quadrature en phase, I-Q, comprenant une branche I, une branche Q présentant un dispositif de polarisation de phase (108), un dispositif de retour (110), et l'appareil adapté pour une observation de polarisation de phase entre des branches I-Q monté entre ledit dispositif de retour (110) et ledit dispositif de polarisation de phase (108) selon l'une quelconque des revendications 1 à 14.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

104
105
205
117
116
203
Filter
204
207
208
115

Fig. 15

104
105
205
117
116
203
Filter
204
207
208
211
210
115

Fig. 16

Monitor output
119 = -2 δ
where δ is the phase error

119

Yes

>0 ——— S1701

No

Yes

<0 ——— S1702

Negative
phase
error

Positive
phase
error

zero phase
error

No

Increase Phase
Bias

Reduce Phase
Bias

Do not change
Phase Bias

S1703

S1704

S1705

Phase Bias
locked to π/2

Fig. 17

Monitor output
119 = -2 δ
where δ is the phase error

119

Yes

>=0

No

Non-
positive
phase
error

positive
phase
error

Increase Phase
Bias

Reduce Phase
Bias

Phase Bias
locked to π/2

Fig. 18

Monitor output
119 = -2 δ
where δ is the phase error

119

Yes

>0

No

Negative
phase
error

Non-
Negative
phase
error

Increase Phase
Bias

Reduce Phase
Bias

Phase Bias
locked to π/2

Fig. 19

start

Receive the sampled
signal and calculate
module square

Multiply the output
of module square
calculation by I
branch data and Q
branch data

Average the output
of mulitplication

End

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5012208 A

- US 2003231075 A1

**Non-patent literature cited in the description**

- **R.A.GRIFFIN et al.** *OFC,* 2002